# EUROPEAN PATENT APPLICATION

(11) **EP 2 870 881 A1**
(43) Date of publication of application: **13.05.2015**
(21) Application number: 13198811.5
(22) Date of filing: 20.12.2013
(51) Int. Cl.: A23B 4/005, A23B 4/06

(54) **Seafood packaging and pasteurization method and system**

(30) Priority: 08.11.2013 US 201314075403
(71) Applicant: Harbor Seafood, Inc., New Hyde Park, New York 11040 (US)
(72) Inventor: Paterson, John D., 80364 BALI (ID)
(74) Representative: Franzolin, Luigi

(57) **Abstract**

The present invention is directed to a system and method for packaging and pasteurizing seafood which results in an extended shelf life.

## Description

### Background of the Present Invention

Numerous seafood products, including blue swimming crabmeat, snow crabmeat, king crabmeat, and lobster meat, are ordinarily packaged and pasteurized in hermetically sealed plastic tubs or metal cans. The plastic tub and metal can packaging are commonplace in the industry and widely accepted commercially. However, although both plastic and metal packaging media are commercially viable, both have drawbacks.

Plastic tubs are prone to seam defects or micro pores that lead to the entry of microorganisms, thereby causing spoilage and less than preferred shelf life. The usual cause for the micro pores is porousness in the seam area consequential to the process of pasteurization (hot temperatures, such as 185 °F, followed by cold temperatures, such as 32 °F) and the effect on the plastic resin container or cup that is seamed to an aluminum lid. The plastic cup swells during the hot and cold process exerting pressure on the seam thereby creating micro pores between the lid and the cup. Micro pores, which enter through the air, lead to early spoilage or reduced shelf life. Air entry further allows remaining bacteria to populate or allows new bacteria to enter. Shelf life of the products depends on factors including but not limited to the initial microbial load, the composition of the microbial population, the storage temperature, and container integrity. The first three points can be controlled and measured to be used in compression of both types of packaging.

Container integrity, however, cannot be 100% controlled. Shelf life of plastic cups is in part dependent on the seam between plastic and aluminum, and metal can seams are dependent on the metal to metal seam.

By controlling the initial microbial load, the composition of the microbial population, and the storage temperature, metal can products can have a shelf life of 18 month or longer, and plastic tubs typically have a shelf life not more than 12 months and more typically have a 10 month shelf life.

Another negative factor is that the heating portion of the process can result in release of a component of the plastic into the food, which can produce a plastic resin gas smell in the seafood and can impart a plastic taste into the flavor of the seafood.

A metal can may also have numerous flaws that are widely excused in the industry. For example, crabmeat that is pasteurized in metal will turn dark grey over time throughout unless the meat is thoroughly mixed with a whitening additive such as sodium acid pyrophosphate. Seafood that is pasteurized in metal may have a metallic taste or smell and meat that has been pasteurized may become scorched (due, at least in part, to the metal's high conductive heat transfer).

As noted, these packaging solutions can introduce various undesirable elements, such as undesirable tastes or odors. Part of this introduction is believed to be due to porousness of the containers, which can further allow undesirable items, such as certain microorganisms, to enter the packaging. The same causes for undesirable elements also cause limitations in the subsequent shelf life of the product.

To overcome the short falls of the present packaging apparatus of plastic tubs and tin metal cans, the present invention is directed to the use of a glass jar for packaging with a form fitting flexible seal between the jar and the lid, and a new pasteurization process. As a result of the use of the glass jar, there is a significant improvement in the organoleptic quality of the seafood, an improvement in the shelf life of the finished product, reduction or elimination of foreign taste and odor, non-discoloration of the seafood, and the packaging process using the glass jar does not scorch the seafood (due at least in part to a milder heat transfer).

### Brief Description of the Present Invention

The present invention is directed to a new process whereby the pasteurization and packaging processes are combined by use of a glass container sealed using particular elements. The implemented protocol integrates the food process technology of pasteurized seafood products and the packaging technology of a glass jar container with a hermetic cap closure and potentially vacuum formation to produce a new medium of chilled pasteurized crab meat, lobster, or other seafood in a glass jar with a refrigerated shelf life preferably of at least 18 months and potentially 24 months or longer.

Glass provides numerous advantages over metal or plastic containers. Glass is flavor and aroma neutral, so it enhances the flavor and organoleptic quality of seafood, whereas metal and plastic may introduce flavors and/or aromas with negative impact to the seafood. Glass, as compared with other container materials, is non-porous and its surface does not absorb microorganisms, especially during a heating process. Further, by using particular encapsulating elements, the threat of toxic migration during heating is mitigated. The glass jar container of the present invention is preferably shatter resistant to normal handling and can withstand falling off a 1-meter table or rolling down a flight of stairs.

In the present invention, a glass container is filled with a seafood product and the filled container is capped preferably using a plastisol liner and a cover. Once capped, the packaged seafood is hermetically sealed and then the filled container is pasteurized, thereby eliminating remaining organisms and precluding their reentry. The liner of the present invention is formed of a material, such as a plastic, which adjusts its shape upon heating to form a seal with the glass.

The present invention affords additional benefits as well. The use of glass, as compared with metal or plastic, is see-thru and uncolored, so it becomes readily possible to visually detect discoloration. Also, although a metal lid is preferred, the liner of the present invention can be extended to cover the entire interior of the lid, thereby eliminating any contact between the seafood of the present invention and a metal surface. Further, because of the seal and the pasteurization process, shelf life may be extended, even without subsequent refrigeration. However, even if the plastic is not extended, an air gap remains between the seafood and the metal.

The present invention includes further benefits beyond superior freshness for the seafood/fish products. Once opened, the container of the present invention, unlike the metal container, can be re-sealed, thereby further enhancing freshness of the product. The glass assembly of the present invention also lends itself to easier cleaning in advance of filling with the fish product. In addition, the container may be available in numerous sizes.

### Brief Description of the Figures

FIG. 1 depicts a Blue Swimming Crab, parts of which are prepared for packaging in the present invention.
FIG. 2 depicts a flow chart of the overall process flow of the present invention.
FIG. 3 depicts the component portions of the glass jar packaging assembly of the present invention.
FIG. 4 depicts the nominal dimensions of the glass jar packaging as shown in FIG. 3.

### Detailed Description of the Present Invention

The present invention is directed to a seafood pasteurizing and packaging system and method using a glass jar assembly. Typical seafood types used in this packaging include portions of select shellfish.

For the preferred embodiment of the present invention, the only seafood used for packaging is live, fresh, clean, wholesome Blue Swimming Crabs (Portunus pelagicus), although other seafood may be used in other embodiments. Prior to processing, the crabs are inspected to assure that they are free from all forms of extraneous or foreign matter, off-odors or off-flavors of any kind. Various inspections, as described below, are used to assure conformance to these aforementioned criteria. The crabs are then steamed.

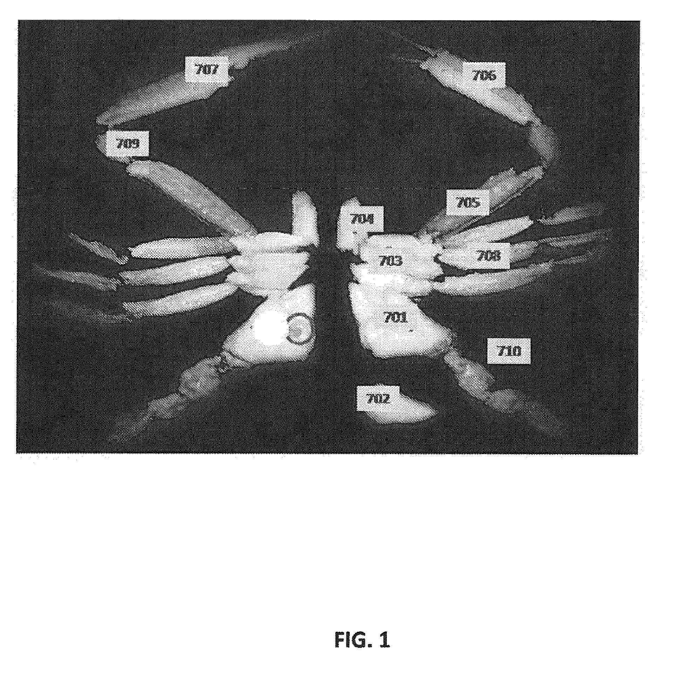

FIG. 1 depicts a typical blue swimming crab. Several portions of the crab are used in the packaging of the present invention.

Jumbo Lump 701 consists of the two large muscles connected to the swimming fins of the crab. Lump meat, which makes up at least most of the crab product, is a grade of crab meat comprised of the fractured Jumbo Lump 701 and large flakes from body 702. Body 702 includes a portion of the backfin and is a blend of smaller broken pieces and special grade crab meat 703. Special crab meat 703 consists of smaller pieces of white meat extracted from the body cavity of the crab. Claw meat 705-710 is the dark pink meat that comes from the swimming fins, appendages and claws of the crab.

A typical packaged product will vary depending on the commercial product specification and application. Common commercial crabmeat product names include Colossal Lump, Jumbo Lump, Petite Jumbo, Super Lump, Backfin Lump, Lump, Backfin, Special, Claw meat, Cocktail Claw. Finished packaged goods may consist of 4 - 12 different meat fill compositions relating to the above product names. The packed finished goods will consist of crabmeat picked from the crab body cavities, claws, legs, shoulders, and appendages. The crab picked meat consists of small body flakes .01-.05 gram-sized pieces, claw flakes, chunks, leg meats .01-2.0 gram-sized pieces and lump to Jumbo meats 2.0-15.0 gram-sized pieces. The picked meat will be filled to the glass jar and processed conforming to the finished product specifications. Measurable liquid is 2 - 7% of the volume.

Blue Swimming Crabs are cooked (preferably steamed) live and subsequently packed in iced, preferably in insulated fiber boxes or Styrofoam, and then transported by truck for pasteurization and packaging.

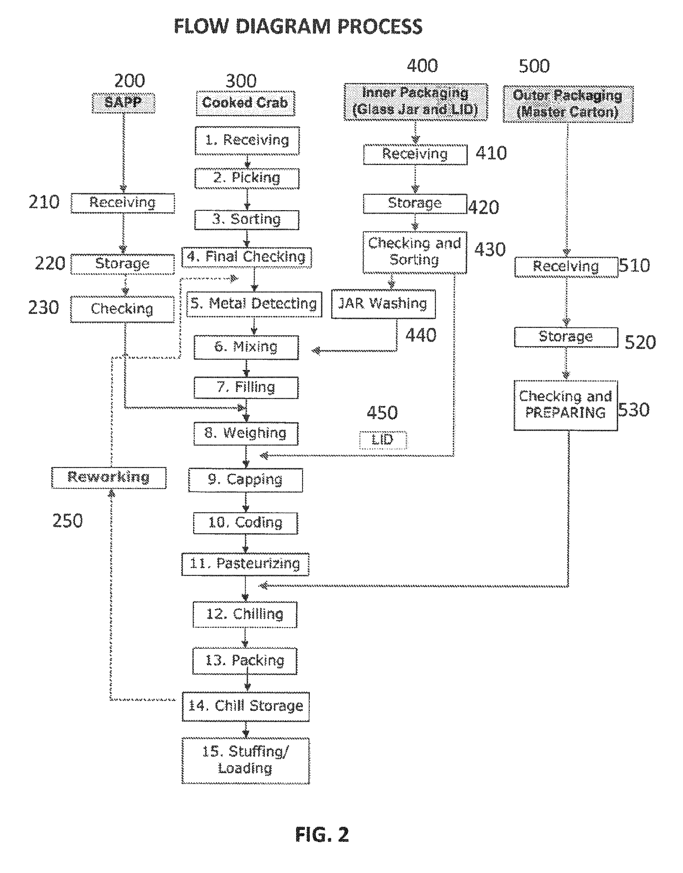

FIG. 2 depicts a flow chart of the overall process. Four portions of the process begin separately and become interrelated - the introduction of SAPP (200, the entire pasteurization and packaging process (300), the glass jar sanitization and preparation process (400), and the outer packaging preparation process (500).

The SAPP introduction process 200, which is optional, includes the steps for introducing Sodium Acid Pyrophosphate (SAPP) or any other comparable additive. Sorted/graded crabmeat is filled into hygienic jars with an addition of SAPP to prevent struvite (magnesium ammonium phosphate) crystal formation. SAPP is received 210 and sent to storage 220 as needed. SAPP goes through a Quality Control check 230 to assure conformance with the needs of the process, such as assuring no contaminants have been introduced. Upon passing check 230, SAPP can be used in the packaging process.

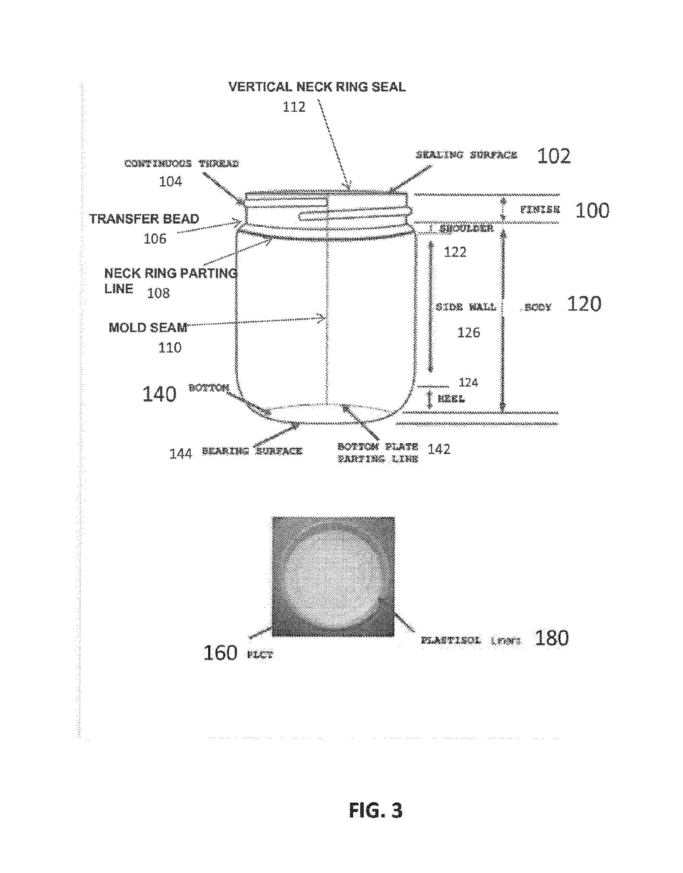

FIG. 3 depicts the five part assembly of the jar of the present invention, including finish 100, body 120, bottom 140, Plastisol-Lined Continuous Threaded (PLCT) cap or lid 160, with plastisol liner 180.In the preferred embodiment of the present invention a five part assembly is used for packaging.

The glass jar of the present invention is an ordinary glass jar, where the glass is food grade and commonly known as "Type III" or "Soda Lime" glass, and optionally formed using safety glass, where the jar has a flat or nearly flat top whereby a cover can be screwed on to the jar. Preferred sizes include 8 oz., but can alternatively be 12 oz., 16 oz., 24 oz., or some other convenient size in either English or metric units.

Finish 100 is the very top part of the glass jar that contains threads or lugs that contact and hold the cap or closure. Specific areas identified in the "finish" are sealing surface 102, continuous thread 104, transfer bead 106, vertical neck ring seal 112, and the neck ring parting line 108.

Body 120 body of the container is that portion which is made in the "body mold". It is the largest part of the container and lies between the finish and the bottom. The characteristic parts of the "body" are the shoulder 122, heel 124, sidewall 126, and mold seam 110.

Bottom 140 of the container is made in the "bottom plate" part of the glass-container mold. The designated parts of the bottom area are normally the bottom plate parting line 142 and the bearing surface 144.

A closure is used which is any of the type preferably formed of a food grade metal and used to form a seal with the glass, preferably using a plastisol lining. Plastisol liner 180, such as but not limited to product S-6256-049, 6832-121, or 3208-051 from the Valspar Company, is a device that helps seal metal closures onto containers. Plastisol is a PVC gasket that is used in metal continuous thread and lug (sometimes called twist) closures.

Plastisol-Lined Continuous Thread (PLCT) Cap 160 consists of a metal shell with a threaded skirt curled at the end. It contains a flowed-in plastisol gasket on the inside. The gasket is extendable in one embodiment so as to cover the entire metal interior surface.

The inner packaging (glass jar and lid packaging) process 400 is intended to assure that the inner packaging materials used are free of defects and contaminants. The process includes received goods 410. The glass jar and lid are received from an approved supplier. They are subsequently delivered to storage 420 as needed. Preferably, the cap is a 70mm PLCT flat top cap with a knurled plastisol liner. The interior of the cap includes a tin coated steel. The liner gasket is formed of a product containing a plasticizer, pigments, lubricants, and stabilizers, which are all suitable for food contact. When closed, the PLCT has a formed seal which cannot be further rotated clockwise.

All received packaging is stored in a suitably dry and clean room. The inner packaging materials go through a Quality Control (QC) check 430 to assure conformance with the needs of the process, such as assuring no contaminants have been introduced. QC and warehouse staffs check glasses and jars relative to requisite quantity and specifications. QC samples for Quality checking refers to QA Letter of Guarantee (LoG) and quality assessment. Every inner packaging (body jar and lid) is examined visually, focusing on potential defects in the materials, such as glass fragments and other potential contaminants.

Upon passing check 430, the glass jars are washed 440. This washing process includes sanitizing with clean water at 35 - 50° C and then cooled to ambient temperature. The lids are similarly rinsed in cool water and dried using a compressed air blower. Every jar is washed before used and inspected for cleanliness. The washing process uses warm spray water of 30-50°C (86 - 122°F). All washed jars are drained completely by putting in the top down position on the clean trays or boxes. Separately, lids can enter the overall packaging process in step 450. Every lid is checked visually for defects and to assure sanitized conditions. Every lid is also checked for assurance that the plastisol liners are completely inside.

Similarly, the outer packaging (master carton packaging) process 500 is intended to assure that the outer packaging materials used are free of defects and contaminants. The process includes received goods 510 and sending them to storage 520 as needed. The outer packaging materials go through a QC check 530 to assure conformance with the needs of the process, such as assuring no contaminants have been introduced. Upon passing check 530, the outer packaging can enter the overall packaging process.

The cooked seafood (shown on FIG. 3 as crab) introduction 300 involves pasteurization and packaging.

The glass jar pasteurization process, which is a part of the overall cooked crab packaging, consists of 6 key steps: filling 7, PLCT cap closure 9, pasteurizing 11, chilling 12, labeling and packing 13, and cold storage 14.

Picking 2 and sorting 3 of the seafood meat is done manually. Picking, the process to remove meat from the shell, and sorting, the process to remove the shell, cartilage and foreign materials, are done under "cold chain" conditions, meaning that the meat is placed on a tray along with crushed ice so as to keep the meat at or near the freezing temperature for water.

The key remaining steps in the process are described below. This is followed by a more lengthy discussion of each process step.

Filling 7 - raw materials are filled into the jar to the commercial weight specification and to the head space (void) process specification. The head space, or void, must be >6% of the container volume.

PLCT Cap Closure 9 - The cap needs to be continuously screwed until the glass finish makes contact with the gasket on the inside of the Cap. The pasteurization process hot step creates steam to soften the compound and facilitate sealing and the cooling step facilitates vacuum formation.

Pasteurization 11 -The seafood-filled containers (8 oz. glass jars) are tightly closed and the seafood is pasteurized in a hot water tank at a minimum water temperature of 183-185°F or a maximum water temperature of 189-191 °F for at least 90 minutes to a nominal maximum of 130 minutes and then immediately shock-chilled in an ice slurry tank at a maximum temperature of 32-34°F for at least 95 minutes, and typically 100-120 minutes. A thermo process authority to achieve a process temperature lethality shelf life of a minimum of 18 months will certify the process protocol.

Vacuum Formation (occurs during pasteurization) -The jar is pasteurized in a hot water tank, then chilled cool in an ice slurry tank. The cooling of the contents creates a vacuum in the headspace, pulling the lid into tight contact with the jar rim and creating a hermetic seal.

The process follows the National Industry Pasteurization Standard Guidelines of The USA National Blue Crab Industries Association, to achieve temperature lethality for a shelf life of 18 months.

Labeling and Packing 13 - Shrink-wrap labels are applied using a wrap procedure that controls the internal meat temperature of the jars. The labeled jars are then packed to master cartons and delivered to cold storage.

Cold Storage 14 - Finished glass jar products are stored at a temperature of -1.1 ° up to +3.3°C (30°F up to 38°F) until ready for shipment.

### Flow of seafood pasteurization and packing

The present invention relates to a variety of seafood, which are interchangeable in terms of the process described below. In the preferred embodiment, cooked crab is used. The description below is specific to cooked crab, however, other seafood, such as but not limited to lobster meat, shrimp, clams, and other crabs such as snow crabs, may alternatively be used.

Blue crabmeat pasteurization was developed to achieve a desired shelf life not to kill a target organism. The process is intended to achieve an internal meat temperature of 85 °C (185 °F) for one minute at the geometric center of the container. Numerous pasteurization studies, such as Gates, et al. ("Thermal Processing Quality and Safety Considerations for the Blue Crab Industry", K. Gates, A. Parker, D. Bauer, Y-w. Huang, and T. Rippen, Seafood Science and Technology Society (SST) 17th Annual Conference, Merida, Yucatan, Mexico, November 1992). Gates, et. al. have defined the thermal lethality (85 °C) or the Total F value in terms of minutes. Using the referred temperature of 85 °C based on Gates et. al., we would need 31 minutes to achieve a 12 months shelf life. The 31 minutes is based on the internal meat temperature at the geometric center of the container. In order to determine the heating temperature, we tested by inserting a thermocouple into the center and we logged temperature throughout the process to ensure we have the required minutes to achieve our commercial shelf life. In the case of the present invention, where the target shelf life is 18 months, the pasteurization time is expanded from 31 minutes to a minimum of 45 minutes (based on the temperature at the geometric center of the container).

Returning to FIG. 2, the process is described below.

Receiving 1 - Cooked crab is received from the supplier, transported by reefer truck in ice-insulated box. The receiving operator checks the condition of ice insulation, and the temperature of the meat to ensure the temperature is proper. Maximum temperature requirement is 40°F (4.4°C) and a minimum of 32° F (0° C). Antibiotic residual test (chloramphenicol) by laboratory is performed periodically, about two times every week. A microbiology test is conducted by laboratory periodically.

Picking 2 - Cooked crab is directly processed or kept in chill temporary storage for waiting. Temperature chill temporary storage is maintained at temperature of 28.4-40°F or -2 ∼ +4.4°C.Temperature chill temporary storage is checked hourly. The operator sorts, focusing on odor, foreign material and decomposed of cooked crab. Picking should be done quickly and carefully to obtain every kind of meat with possibly free from shell. The temperature of the crabmeat is kept cool with crushed ice on tray. Control is kept of sanitizing employee and equipment during the process.

Sorting 3 - An operator sorts seafood meat for odor, shell, foreign material and decomposed material. Temperature of crabmeat is kept cool with crushed ice on tray. Control is kept of sanitizing employee and equipment during the process.

Final Checking 4 - Crabmeat from sorting will be checked again to make sure that meat already has been sorted correctly. Control is kept of sanitizing employee and equipment during the process.

Metal Detecting 5 -Seafood meat is checked for free metal fragment using metal detectors.

Mixing 6 - QC and production supervisor determine the source of meat which is going to be mixed according to the standard required and recorded. The temperature of crabmeat is kept cool with crushed ice on tray.

Filling 7 - SAPP powder is added into the jar for target composition of 1.0-1.2 gr per lbs. of the crab meat. Crabmeat is filled into each jar carefully refer to the standard requirement.

Weighing 8 - A scale is calibrated every day before used, during used, after used, after repair and kept clean. The filling weight for each jar is based of size product (specification standard). QC checks the weight, label, and scale setting every 30 minutes for 10 jars and records the data.

Capping 9 - The operator checks the lid completely with plastisol liners inside. The PLCT cap is manually screwed tightly onto the jar until the plastisol gasket has made intimate contact with the top of the jar finish. QC checks randomly for the capped jars hourly.

Coding 10 - The coding process is conducted automatically using a coding machine. Coding is placed on the bottom of each jar. All information in coding must be done properly and clearly readable. The code information includes the processing plant, the year of production, the Julian date, the type of packaging, the type of product, seam, the batch number, the mixing code for the supplier, and the expiration date. Coded jars will be held in ice water until pasteurization.

Pasteurizing 11 - Eight ounce jar products are loaded to a pasteurization basket and recorded. Pasteurization process time and temperature are typically 86°C - 87°C in 95 minutes heating time. The pasteurization tank water temperature is monitored by QC. The water is kept clean and changed every day.

Pasteurization heating/cooling schedules are applied to hermetically sealed crabmeat containers and are established to achieve a thermal process, an expression of accumulated heat exposure or lethality at the product cold point.

There is no target organism for the pasteurization of crabmeat. The process evolved based on shelf life extension. The actual shelf life will depend on such factors as the initial microorganism load, composition of the microbial population, storage temperature, and container integrity.

The destruction of microorganisms begins at relatively low temperatures and accelerates with increasing temperature. As the internal temperature of the product approach or exceeds the reference temperature, the destructive impact is maximized. Even as the product cools, microorganism continues to die because the heat that remains in the jars contributes (in decreasing proportions) to the lethality of the process.

The National Blue Crab Industry Pasteurization and Alternative Thermal Processing Standards recommend that crab be chilled to approximately 37.0°F (3°C) or below as measured at the containers geometric center in 180 minutes or sooner after completing the heating step. This is accomplished by initial submersion in agitated ice slush then placement in refrigerated storage.

Based on the reference above, the critical operation limit for pasteurization temperature is 185°F (85°C). The F-value was calculated at the temperature base as 185°F. The F-value is a measure of the total/accumulated heat exposure or Lethality value which is used to calculate the total heating time to reduce a population of microorganisms. In the process, the F-value usually represents a multiple of decimal reduction time (D-value) that mean as the time needed to reduce a population of microorganisms by 90% (one log cycle).

Chlorinated water in the chilling tank is maintained with residual minimum of 0.5 ppm. Chlorinated water is used to meet a goal of making sure that the water is safe, and no more pathogenic bacteria live in the used water. The use of chlorinated water includes the ability to kill and reduce the population of natural microbial in the water. The chlorinated water does not enter the glass jar container. The pasteurization process kills the pathogen within the sealed jar.

There is a certain seam failure rate in any product. When the lids are hot, microorganism in the chilling water more easily breaches the seals. As the sealant hardens the packaging become impermeable to microorganism. Chlorination of the chilling water kills organism that might otherwise cause spoilage or safety problems if they were to get into the food; however, chlorination cannot be expected to compensate for defective seam integrity. Only breakpoint chlorination is recommended. Chlorine test strips are available and used for confirming these low levels. The preferred temperatures and times discussed below are, unless otherwise stated, the midpoint of a range of ± 5%.

### a. Pasteurization Process 8 oz. Glass Jar

- Initial Temperature : 32 - 34°F
- Time Operating Limit : 95 minutes
- Temperature Operating Limit : 86.1-87.0°C (187-189°F) b. Chilling Process
- Time Operating Limit : 95 minutes
- Temperature Operating Limit : 0°C (32°F) with high agitation water c. Additional Protocol
- F-value : 45-55 minutes
- Product temperature after Chilling : under 38°F

Chilling 12 - After pasteurization, the basket is transferred to a chilling tank quickly and carefully. The chilling tank water temperature will be checked regularly for each chilling period and recorded. The chilling tank water temperature is maintained at 0-2°C (32-35.5°F). The water should be kept clean and change every day.

Packing 13 - Each master carton consists of 12 of jars. Operators check jars when they are put into a master carton for any sign of tempering and defective. Stuffing of packing must be careful and quick. Defective jars are separated and recorded. Master carton is maintained clean and in good condition.

Chill Storage 14 -The chill room is operated at -1.1° up to +3.3°C (30 up to 38°F). The temperature of the chill room will be checked by operator hourly. The master cartons are placed in an upside down position and at least 30 cm from the wall with stagger stack arrangement and bellow refrigerated machine. Product is shipped in a system of first in first out (FIFO). The opening and closing of chill storage gates are properly controlled.

Chill storage is maintained between temperature of 30 to 38°F (-1 to 3°C). Limit set according to the FDA's: Fish & Fisheries products Hazards & controls guidelines Fourth Edition appendix 4 "pathogen growth and inactivation," Table #A2 "time/temp guidelines for controlling pathogen growth and toxin formation in seafoods", which shows that Clostridium botulinum type E (the target pathogen) grows only above 37.94°F (3.3°C) so the critical limit set at 38°F (3°C).

Stuffing 15 -Pre inspection before loading is done for the sanitize condition and also of the reefer function. Container temperature is set and maintained in the range temperature of 32 ± 1°F. Each container must be pre cooled to achieve 32°F before loading. Stuffing in the container is performed quickly & carefully. Stuffing in the container must allow for good air circulation. Stuffing procedure includes the sanitation of the container, temperature of container, quantity of master carton and the time used, and is regularly checked during loading. All information about stuffing/loading is recorded. The export container is released after the temperature reaches standard of 32°F (0°C).

Finished product is stored at a temperature of -1.1° up to +3.3°C (30 up to 38°F) until ready for shipment.

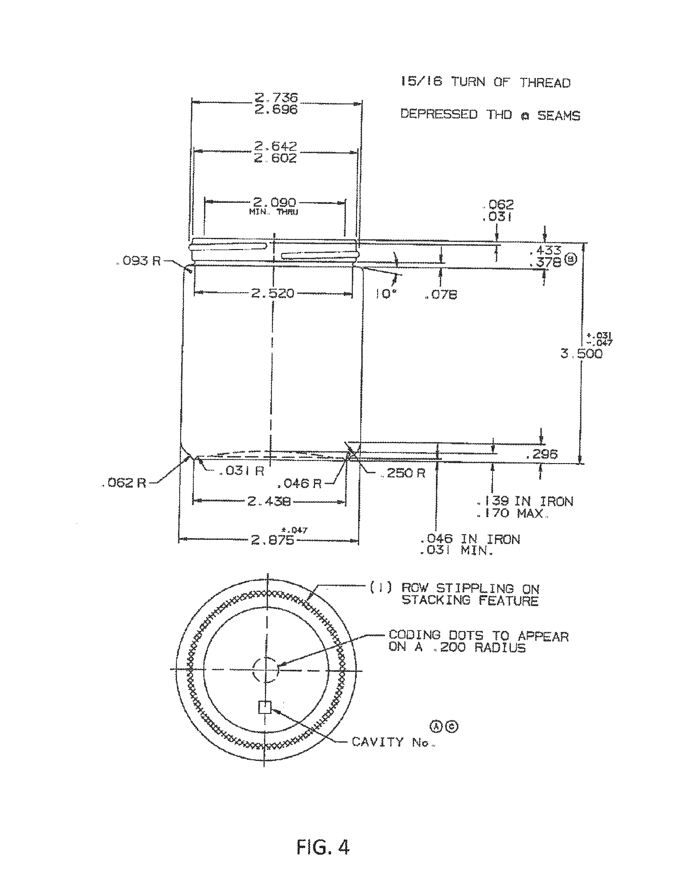

FIG. 4 shows the glass jar assembly as described above, but including nominal dimensions for each portion of the assembly. Of course, the nominal dimensions may be adjustable based on alternatively sized or shaped containers. FIG. 4 also shows additional attributes of the glass jar including 15/16 turn of head, depressed seams, row stippling on stacking feature, doing dots, and a cavity number location. Although all of these features are included in the preferred embodiment, different combinations of them may appear in different forms of the glass jar of the invention.

## Claims

1. A method for pasteurizing cooked seafood comprising the steps of:
cleaning and sanitizing a glass container,
filling said glass container with cooked seafood, said cooked seafood cooled after cooking to and maintained at a temperature of no greater than 40 °F,
closing said glass container with a cover containing a liner, said liner creating a seal between said cover and said glass container,
heating said sealed container to a temperature of at least 187 °F for at least 95 minutes, and
cooling said closed container by immersion in a chlorinated bath at a temperature of no greater than 34 °F for a period of 95 minutes.

2. The method of claim 1, wherein said seafood in said closed container has a resulting refrigerated shelf life of at least 18 months.

3. The method of claim 1, wherein said liner includes a flexible substance formed at least in part using plastic or a plasticized element, wherein said plastic or plasticized element forms a seal with said glass container.

4. The method of claim 1, wherein said seafood is a type of cooked crab.

5. The method of claim 1, wherein an air gap remains between the seafood and the cover of said glass container.

6. The method of claim 1, wherein said seafood is a type of lobster.

7. A method for packaging cooked seafood comprising the steps of:
cleaning and sanitizing a glass container,
filling said glass container with cooked seafood, said cooked seafood cooled after cooking to and maintained at a temperature of no greater than 40 °F,
closing said glass container with a cover containing a liner, said liner creating a seal between said cover and said glass container,
heating said closed container to a temperature of at least 187 °F for at least 95 minutes, and
cooling said closed container by immersion in a chlorinated bath at a temperature of no greater than 34 °F for a period of 95 minutes.

8. The method of claim 7, wherein said seafood in said closed container has a resulting refrigerated shelf life of at least 18 months.

9. The method of claim 7, wherein said liner and threading internal to said cover include a flexible substance formed at least in part using plastic or a plasticized element, wherein said plastic or plasticized element forms a seal with said glass container.

10. The method of claim 7, wherein said seafood is a type of cooked crab.

11. The method of claim 7, wherein an air gap remains between the seafood and the cover of the container.

12. The method of claim 7, wherein said seafood is a type of lobster.

13. A system for pasteurizing and storing cooked seafood comprising:
a glass container, including a cover and flexible liner and threading, said container filled with cooked seafood; said cooked seafood cooled after cooking to and maintained at a temperature of no greater than 40 °F; but with a remaining air gap, with said plasticizing liner and said glass container matingly forming a hermetic seal,
storing cooked seafood in said glass container and sealing said glass container with a cover containing a liner, said liner creating a seal between said cover and said glass container,
a heating unit for heating said sealed container to a temperature of at least 187 °F for at least 95 minutes, and
a chlorinated bath for cooling said sealed container by immersion at a temperature of no greater than 34 °F for a period of 95 minutes.

14. The system of claim 13, wherein said seafood in said sealed container has a resulting refrigerated shelf life of at least 18 months.

15. The system of claim 13, wherein said flexible liner and threading are formed at least in part using plastic.

16. The system of claim 13, wherein said seafood is a type of cooked crab.

17. The system of claim 13, wherein said seafood is a type of lobster.
